# EUROPEAN PATENT APPLICATION

(11) **EP 2 228 406 A1**
(43) Date of publication of application: **15.09.2010**
(21) Application number: 09003652.6
(22) Date of filing: 13.03.2009
(51) Int. Cl.: C08L 63/00, C09D 163/00

(54) **Improved mechanical properties of epoxy filled with functionalized carbon nanotubes**

(71) Applicant: Bayer MaterialScience AG, 51368 Leverkusen (DE)
(72) Inventor: Meyer, Helmut, 51519 Odenthal (DE); Zhang, Zhong, 100190 Beijing (CN); Zhang, Hui, 650118Kunming, Xishan District, Yunnan Province (CN); Long-Cheng, Tang, Dongzhilu, Shushan District 230031 Heifei, Anui Province (CN); Peng, Ke, Dadukou District 400084 Chongqiang (CN); Liu, Lu-Qi, Chaoyang District 100191 Beijing (CN); Li, Hongchao, Pudong 201204 Shanghai (CN); Bahnmüller, Stefan, 098641 Singapore (SG); Hitzbleck, Julia, 50668 Köln (DE)

(57) **Abstract**

The present invention deals with a methodology of incorporating carbon nanotubes (CNTs) into an epoxy matrix and thereby producing epoxy-based CNT nanocomposites. Both the pristine and ozonized CNTs are almost homogeneously dispersed into the resin by this approach. Compared with the pristine CNTs (*p*-MWCNTs), the ozonized ones (*f-*MWCNTs) offer considerable improvements on mechanical properties within the epoxy resin.

## Description

The present invention deals with a methodology of incorporating carbon nanotubes (CNTs) into an epoxy matrix and thereby producing epoxy-based CNT nanocomposites. Both the pristine and ozonized CNTs are almost homogeneously dispersed into the resin by this approach. Compared with the pristine CNTs (*p*-MWCNTs), the ozonized ones (*f*-MWCNTs) offer considerable improvements on mechanical properties within the epoxy resin.

### BACKGROUND OF THE INVENTION

Many researchers have paid attention to carbon nanotubes (CNTs) since they have been discovered by Iijima in 1991 [Nature 1991, 354, 56]. Single-walled carbon nanotubes (SWCNTs) consist of single layers of graphite lattice rolled into perfect cylinders with a diameter usually in the range of 0.7 to 2 nm, whereas multi-walled carbon nanotubes (MWCNTs) consist of several cylindrical shells generally with larger diameters. The unique structure provides the CNTs with exceptional thermal stability and remarkable mechanical, electronic and structural properties. In the past decades, much attention had been given to the utilization of CNTs to improve the mechanical and electronic properties of polymer materials. [WO2008057623; WO2006096203; WO2003040026; Adv Mater 2004, 16, 58].

Carbon nanotubes, according to the prior art, are understood as being mainly cylindrical carbon tubes having a diameter of from 3 to 100 nm and a length that is a multiple of the diameter. These tubes consist of one or more layers of ordered carbon atoms and have a core that differs in terms of morphology. These carbon nanotubes are also referred to as "carbon fibrils" or "hollow carbon fibers", for example.

Carbon nanotubes have been known for a long time in the specialist literature. Although Iijima (publication: S. Iijima, Nature 354, 56-58, 1991) is generally considered to have discovered nanotubes, such materials, in particular fibrous graphite materials having a plurality of graphite layers, have been known since the 1970s or early 1980s. The deposition of very fine fibrous carbon from the catalytic decomposition of hydrocarbons was described for the first time by Tates and Baker (GB 1469930A1, 1977 and EP 56004 A2, 1982). However, the carbon filaments produced on the basis of short-chained hydrocarbons are not described in greater detail in respect of their diameter.

Conventional structures of such tubes are those of the cylinder type. In the case of cylindrical structures, a distinction is made between single-wall monocarbon nanotubes and multi-wall cylindrical carbon nanotubes. Conventional processes for their production are, for example, arc discharge, laser ablation, chemical vapor deposition (CVD process) and catalytic chemical vapor deposition (CCVD process).

Such cylindrical carbon nanotubes can also be prepared by an arc discharge process. Iijima, Nature 354, 1991, 56-58 reports on the formation, by the arc discharge process, of carbon tubes consisting of two or more graphene layers which are rolled up to form a seamless closed cylinder and are nested inside one another. Chiral and achiral arrangements of the carbon atoms along the longitudinal axis of the carbon fibers are possible depending on the rolling vector.

Similar structures of carbon tubes, in which a cohesive graphene layer (so-called scroll type) or a broken graphene layer (so-called onion type) is the basis for the structure of the nanotube, were first reported by Bacon et al., J. Appl. Phys. 34, 1960, 283-90. This structure usually is designated as scroll type. Similar structures were later also found by Zhou et al., Science, 263, 1994, 1744-1747 and by Lavin et al., Carbon 40, 2002, 1123-1130.

Epoxy is one of the well-used thermosetting polymers in industry owing to its low shrinkage upon curing, excellent dimensional stability, good anti-corrosion and outstanding adhesion. However, the brittle nature of epoxy resin is a major disadvantage for its application as structural materials, especially for high performance applications used in electronic, aeronautic and astronautic industries. Reinforcing and toughening of epoxy resin with CNTs appears as a preferable way, however, the major challenge so far is how to disperse homogeneously the CNTs into a polymer matrix and how to realize a good adhesion between the CNTs and the polymer matrix.

CNTs with a huge aspect ratio are highly entangled and thus form large agglomerates, which impair both mechanical and electrical properties of the resulted epoxy-CNTs composite [Adv Mater 2000, 12, 750 and Appl Phys Lett 1998, 73, 3842,].

Several methods have already been tried in the past years to effectively break up the CNT agglomerates in order to disperse CNTs homogeneously into the polymer matrix that benefits improved mechanical, electrical and thermalo properties of resulting nanocomposites. One of them is the mechanical mixing, i.e. adding CNT fillers into polymers by shear-intensive stirring, such as high speed mixing [W02008054034; WO2008034939; Polymer 2006, 47, 293; Comp Sci Tech 2004, 64, 2363.]. Utilization of ultrasonication sometimes helps to obtain improved dispersion with or without combined physical mixing. [Comp Sci Tech 2009, 69, 335; SAMPE Conference Proceedings 2008, 53, 329; Recent Adv Textile Comp Procs Intern Conf Textile Comp, 9th, Newark US, Oct 13-15, 2008; J Mater Sci 2008, 53, 5; Mater Sci Eng A: Struct Mater Props Microstruct Proc 2008, A475, 157]

During above processing, appropriate organic solvents and surfactant agents [WO2006096203; SAMPE 2002 Symp & Exhi; Chem Mater 2000, 12, 1049; Gaofenzi Cailiao Kexue Yu Gongcheng 2008, 24, 134] may be required to dilute the CNT-polymer blends and to increase compatibility of the two phases. However, it was reported that the intense physical mixing and ultrasonication are not sufficient to really break up the entanglements of CNTs. [Polymer 1999, 40, 5967; AIP Conf Proc 2000, N544, 521; Appl Phys Lett 2002, 80, 2767]

Besides homogeneous dispersion of CNTs into the polymer matrix, the interaction between graphitic CNTs and organic polymer host also plays a crucial role to reinforce polymer composites. [WO2004070349; US2006202168; WO2005014708; US2007259994] Several efforts have been paid to improve the non covalent interaction between inorganic filler and organic host by π-π supramolecular interaction using pyrene segments [Chem Comm 2003, 23, 2904; Chem Mater 2004, 16, 4005; J Am Chem Soc 2006, 128, 6556] or porphyrins [Adv Mater 2005, 17, 871] containing polymer chains which are like "polysoap". Covalently functionalized CNTs with chemical groups or grafting polymer is another way to efficiently promote the dispersion and to ensure good CNT-polymer interfacial adhesion. [WO2007115162; US2008090951; WO2005028174; Nano Lett 2003, 3, 1107; Adv Funct Mter 2004, 14, 643; Compsites Part A: Appl Sci Manufc 2007, 38A 1331; Nanotechnology 2006, 17, 155; SAMPE Conference Proceedings 2008, 53, 5&40; Comps Sci Tech 2008, 68 3259; Comps Sci Tech 2008, 67 3331; J Mater Sci 2008, 43, 2653; Chem Mater 2007, 19, 308; Eur Polym J 2006, 42, 2765; J Appl Polym Sci 2006, 100, 97; Polym Rev 2007, 47, 265].

Although the above methods prove to be efficient, there are severe limitations for industrial practice. Regardless the extra-cost of solvents, dispersing CNTs into polymers with the aid of organic solvents is also time- and energy-consuming, since the solvents have to be removed completely from polymers before curing. Moreover, the organic solvents bring about harmful effects to environment and health. The similar problems are also present in the case of functionalizing CNTs, when concentrated HNO₃/H₂SO₄ or H₂O₂ is utilized to serve as the strong liquid oxidizer. Using surfactants to improve CNTs dispersion may also be problematic because the surfactants remain in the resulting nanocomposites and might degrade the performance. Multi-steps modification of CNTs with covalent grafting polymers might not be feasible for industrial applications due to the complicated chemical procedure and high cost.

In the present invention ozonized multi-wall carbon nanotubes (MWCNTs) were used as the reinforcing fillers to improve the mechanical and electrical properties of epoxy resin. Preferably, ozonolysis in the presence of water vapour is applied to efficiently functionalize the MWCNTs. Compared with the traditional oxidation process using strong liquid oxidizer, ozonolysis is much more convenient for processing, environmental friendly as well as less expensive. The MWCNTs with surface modification are mechanically blended with an epoxy resin under optimized processing conditions, and no solvents present in the entire procedure. By this method, a satisfied homogeneous dispersion of MWCNTs into epoxy is achieved, especially for the ozonized MWCNTs of the present invention. The MWCNTs/epoxy nanocomposite shows significantly improved mechanical properties even at relatively low MWCNT content in comparison with the neat epoxy resin.

### SUMMARY OF THE INVENTION

The present invention is to provide a process of efficiently functionalization of CNT agglomerates by ozonolysis in the presence of water vapour and disintegrating such ozonized carbon nanotubes (CNTs) into epoxy resin, leading to the reinforced CNTs-epoxy polymer composites thereby.
One embodiment of the present invention provides methods of incorporating CNTs into epoxy polymer matrix, and methods of producing the CNT/EP nanocomposites. The CNTs have at least one dimension of approximately 100 nm or less and are dispersed substantially uniformly in the polymer matrix.

Subject matter of the invention is a composite material comprising epoxy polymers, carbon nanotubes and optionally curing agents, **characterized in that** the carbon nanotubes comprised have been oxidized by simultaneous treatment with oxygen/ozone in the gas phase comprising the steps
a) placing carbon nanotubes into a reaction zone
b) passing a mixture of ozone, oxygen and water through the carbon nanotubes.

A preferred Material is **characterized in that** the mixture of ozone, oxygen and water in step b) is passed continuously through carbon nanotubes agglomerates.

The temperature in the reaction zone in step b) is particularly at last 200 °C, preferably at last 120 °C, more preferably from 0 to 100 °C, most preferably 10 to 60 °C.

The reaction time of ozonolysis of carbon nanotubes in step b) is particularly up to 120 minutes, preferably up to 60 minutes, most preferably up to 30 minutes.

The exposure of carbon nanotubes in step b) is particularly carried out with an ozone/oxygen mixture including a percentage of ozone from 1 vol.-% to about 11 vol.-%.

The flow rate of the mixture of ozone, oxygen and water in step b) is particularly from about 100 l/hour to about 1000 1/hour, preferably from about 100 l/hour to about 200 l/hour per 1 g of carbon nanotubes.

The relative humidity of water vapour in the reaction zone in step b) is particularly up to 100 %, preferably at least 10 % up to 100 %, particularly preferred 10 % to 90 %.

A further preferred material is **characterized in that** the amount of carbon nanotubes is from 0.01 to 5 % by weight, preferably from 0.05 to 3 % by weight, particularly preferred from 0.1 to 1 % by weight of the composite material.

In a further preferred embodiment of the invention the material comprises epoxy polymer which is selected from the group of diglydicyl dether of bisphenol A epoxy (DGEBA), novolac epoxy, brominated epoxy polymers and combinations thereof.

In a further preferred embodiment the material is **characterized in that** the curing agent is selected from the group of aromatic amine curing agents comprising diaminodiphenyl sulfone (DDS), diaminodiphenyl methane (DDM) and others.

Another subject matter of the present invention provides the manufacturing methods comprising the steps of: 1) mechanically mixing ozonized CNTs into epoxy resin to form a blending; 2) dispersing the blending by high shear mixing system to form a CNT/epoxy masterbatch; 3) adding a certain amount of curing agent and epoxy resin to the masterbatch to form a dispersion; 4) further mechanically mixing the dispersion; 5) degassing and curing the mixture to form a CNT/epoxy composite, wherein the CNTs are dispersed and integrated into the epoxy matrix.

A further subject matter of the invention is the use of the new composite material for the manufacturing of wind turbines, vehicle and bridge construction parts and sporting goods.

Another embodiment of the present invention provides nanocomposites reinforced with ozonized CNTs. For example, the composite may comprise an epoxy resin and a low weight percentage of CNTs, e.g., about from 0.1 to 1.0 by weight.

In other embodiments of the present invention, any suitable CNT loading that cause an increase in ultimate strength of about 10% or more, and an increase in elongation at break of about 10% or more, may be utilized. Any suitable CNTs loading that cause about 50% or more enhancement of strain critical stress intensity (K_{IC}), and about 130% or more enhancement of plain strain critical strain energy release rate (G_{IC}), may be utilized.

In other embodiment of the present invention, any suitable ozonized CNTs loading that cause an increase in ultimate strength of about 20% or more, and an increase in elongation at break of about 80% or more, may be utilized. Any suitable ozonized CNTs loading that cause about 30% or more enhancement of K_{IC}, and about a two-fold or more enhancement of G_{IC}, may be utilized.

### BRIEF DESCRIPTION OF THE DRAWING

Figure 1 illustrates the tensile stress-strain curves of epoxy-based nanocomposites according to this invention.
Figure 2 illustrates the tensile properties of neat epoxy and epoxy-based nanocomposites filled with the *p-* and *f*-MWCNTs.
Figure 3 illustrates the fracture toughness of neat epoxy and epoxy-based nanocomposites filled with the *p*- and *f*-MWCNTs.

### DETAILED DESCRIPTION OF THE INVENTION

The present invention relates toward methodologies of incorporating CNTs into epoxy matrix, and to the CNTs/epoxy nanocomposites produced by such process. The CNTs have at least one dimension of approximately 100nm or less and are dispersed substantially uniformly in the matrix material.

Carbon nanotubes, according to the present invention, are multi-walled carbon nanotubes (MWCNTs), such CNTs can be of variety of lengths, diameter, number of tube walls, etc. It is worth noting that single-walled carbon nanotubes (SWCNTs) may be also suitable to the present invention.

Preferably, carbon nanotubes with high purity are used in the present invention. The purity refers here to percentage of carbon nanotubes in the mixture of carbon nanotubes with any contaminant materials, such as metallic residues and amorphous impurities. The purity of a carbon nanotube in the present invention is more than 95%, preferably more than 98%.
A carbon nanotube of the present invention is either a single-walled carbon nanotube (SWCNT) or a double walled carbon nanotube (DWCNT) or a multi-walled carbon nanotube (MWCNT). It can also be a carbon nanofiber in fishbone or platelet structure or a graphene or graphitic sheet. All these carbon structures may include heteroatoms in their graphitic layers like nitrogene, boron, and others.

Carbon nanotubes according to this invention comprise all single-walled or multi-walled carbon nanotube structures based on cylinder type, scroll type, or onion type structure. Preferred are multi-walled carbon nanotubes of cylinder type or scroll type or mixtures thereof.

Preferably, carbon nanotubes with a length to diameter ration of higher than 5, most preferably of higher than 100 are used.

Most preferably, carbon nanotubes in the form of agglomerates are used, wherein the agglomerates have an average diameter in the range of 0,05 to 5 mm, preferably 0,1 to 2 mm, an most preferably 0,2 to 1 mm.

The mean diameter of the carbon nanotubes is from 3 to 100 nm, preferably from 5 to 80 nm, particularly preferably from 6 to 60 nm.

In contrast to the previous CNTs described in the literature, with structures of the scroll type having only one continuous or broken graphene layer, in the novel structural forms of carbon a plurality of graphene layers are combined to form a pile, which is in rolled-up form (multi-scroll type). Such carbon nanotubes and carbon nanotube agglomerates are, for example, subject of the yet unpublished German patent application with official application no. 102007044031.8 whose content regarding the CNT and their production herewith will be included in the matter of disclosure in this application. This CNT structure behaves to the known carbon nanotubes of the simple scroll type in terms of structure like the multi-wall cylindrical monocarbon nanotubes (cylindrical MWNT) to the single-wall cylindrical carbon nanotubes (cylindrical SWNT).

Unlike in the onion-type structures still described occasionally in the prior art, the individual graphene or graphite layers in the novel carbon nanotubes evidently run, when viewed in cross-section, continuously from the centre of the CNTs to the outside edge, without interruption. This can permit, for example, improved and more rapid intercalation of other materials into the tube structure, because more open edges are available as entry zones of the intercalates, as compared with CNTs having a simple scroll structure (Carbon 34, 1996, 1301-1303) or CNTs having an onion-type scroll structure (Science 263, 1994, 1744-1747).

The methods known today for the production of carbon nanotubes include arc discharge, laser ablation and catalytic processes. In many of these processes, carbon black, amorphous carbon and fibers having large diameters are formed as by-products. In the case of the catalytic processes, a distinction can be made between deposition on supported catalyst particles and deposition on metal centers formed in situ and having diameters in the nanometer range (so-called flow processes). In the case of production by the catalytic deposition of carbon from hydrocarbons that are gaseous under reaction conditions (CCVD; catalytic carbon vapor deposition hereinbelow), acetylene, methane, ethane, ethylene, butane, butene, butadiene, benzene and further carbon-containing starting materials are mentioned as possible carbon donors. Preferably, CNTs obtainable from catalytic processes are used.

The catalysts generally contain metals, metal oxides or decomposable or reducible metal components. For example, Fe, Mo, Ni, V, Mn, Sn, Co, Cu and others are mentioned as metals in the prior art. Although most of the individual metals have a tendency to form nanotubes, high yields and low amorphous carbon contents are advantageously achieved according to the prior art with metal catalysts that contain a combination of the above-mentioned metals. Preferably, CNTs obtainable by use of mixed catalysts are employed..

Particularly advantageous systems for the synthesis of CNTs are based on combinations of metals or metal compounds which contain two or more elements from the series Fe, Co, Mn, Mo, and Ni.

The formation of carbon nanotubes and the properties of the tubes that are formed are dependent in a complex manner on the metal component, or combination of a plurality of metal components, used as catalyst, the support material used and the interaction between the catalyst and the support, the starting material gas and partial pressure, the admixture of hydrogen or further gases, the reaction temperature and the residence time or the reactor used

A preferred embodyment of the invention is the use of carbon nanotubes prepared by a process according to WO 2006/050903 A2.

In all different processes described above using different catalysts, carbon nanotubes of different structure are being produced, which are obtained from the process usually in the form of carbon nanotube agglomerates.

For the invention preferably suitable carbon nanotubes can be obtained by processes which are being described in following literature:

The production of carbon nanotubes having diameters of less than 100 nm was described for the first time in EP 205 556 B1. In this case, the production is carried out using light (i.e. short- and medium-chained aliphatic or mono- or bi-nuclear aromatic) hydrocarbons and an iron-based catalyst, on which carbon carrier compounds are decomposed at a temperature above 800 to 900□C.

WO 86/03455A1 describes the production of carbon filaments which have a cylindrical structure with a constant diameter of from 3.5 to 70 nm, an aspect ratio (ratio of length to diameter) of greater than 100 and a core region. These fibrils consist of a large number of interconnected layers of ordered carbon atoms, which are arranged concentrically around the cylindrical axis of the fibrils. These cylinder-like nanotubes were produced by a CVD process from carbon-containing compounds by means of a metal-containing particle at a temperature of from 850□C to 1200□C.

A process for the production of a catalyst which is suitable for the production of conventional carbon nanotubes having a cylindrical structure has also become known from WO2007/093337A2. When this catalyst is used in a fixed bed, relatively high yields of cylindrical carbon nanotubes having a diameter in the range from 5 to 30 nm are obtained.

A completely different way of producing cylindrical carbon nanotubes has been described by Oberlin, Endo and Koyam (Carbon 14, 1976, 133). Aromatic hydrocarbons, for example benzene, are thereby reacted on a metal catalyst. The resulting carbon tube exhibits a well-defined, graphitic hollow core which has approximately the diameter of the catalyst particle, on which there is further, less graphitically ordered carbon. The authors suppose that the graphitic core is formed first by rapid catalytic growth, and then further carbon is deposited pyrolitically. The entire tube can be graphitized by treatment at high temperature (2500□C-3000□C).

Most of the above-mentioned processes (arc discharge, spray pyrolysis or CVD) are used today for the production of carbon nanotubes. The production of single-wall cylindrical carbon nanotubes is very expensive in terms of apparatus, however, and proceeds according to the known processes with a very low formation rate and often also with many secondary reactions, which result in a high proportion of undesirable impurities, that is to say the yield of such processes is comparatively low. For this reason, the production of such carbon nanotubes is still extremely expensive even today, and they are used in small amounts only for highly specialized applications. However, its use can also be considered fo this invention, but it is less preferably than the use of multi-walled carbon nanotubes of the cylinder or scroll type.

Today, the production of multi-walled carbon nanotubes in form of nested seamless cyclindrical tubes or in the form of scroll or onion type structure is being carried out commercially in large quantities by using catalytic processes. These processes usually result in higher productivity than the arc discharge process or other known processes and are being typically done in the kg range, i.e. for the production of several kg per day. Carbon nnotubes obtained from such processes are usually more cost efficient than singe-walled carbon nanotubes and thus, are being used as an additive for enhancement of product properties in various materials.

In the present invention, the CNTs are surface-modified by ozone treatment in the presence of water vapour in order to increase the CNTs-epoxy compatibility and dispersion of CNTs. CNTs are ozonized to yield chemical moieties attached to their surface, end-caps and side-walls. The ozone-modified CNTs contain oxygen-containing groups attached to their end-caps and side-walls, i.e. carboxylic groups, carbonyl groups, hydroxyl groups etc.

In the present invention, suitable epoxy resins include, but are not limited to, diglycidyl ether of bisphenol-A epoxy (DGEBA), novolac epoxy, cycloaliphatic epoxy, brominated epoxy, and combinations thereof. Suitable curing agents include, but are not limited to, cycloaliphatic amines, aliphatic amines such as diethylene triamine (DETA) and tetraethylene pentamine (TEPA), aromatic amines such as diamino diphenyl sulfone (DDS) and metaphenylene diamine (MPDA), anhydrides such as trimellitic anhydride (TMA), methyltetrahydrothalic anhydride (MTHPA), methylhexahydrothalic anhydride (MHHPA) and combinations thereof. Additionally, the epoxy and curing agent system may further comprise some additives such as, but not limited to, plasticizers, anti-degradation agents, diluents, toughening agents, and combinations thereof.

Referring to the following figure, the process of the present invention comprises the steps of: 1) mechanically mixing ozonized CNTs into epoxy resin to form a mixture; 2) dispersing the mixture by a high shear mixing system to form a homogeneous CNT/epoxy masterbatch; 3) adding optionally a curing agent and additional epoxy resin to the masterbatch to form a dispersion; 4) further mechanically mixing the dispersion to form a homogeneous mixture; 5) degassing and curing the mixture to form a CNT/epoxy composite, wherein the CNTs are dispersed and integrated into the epoxy matrix.

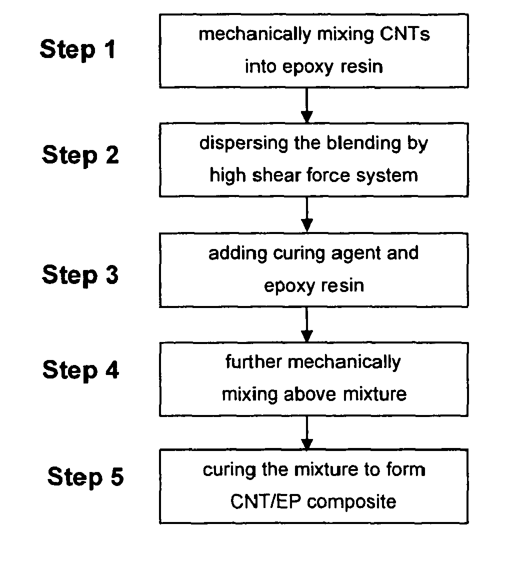

In the first step, relatively high weight loading of CNTs (about 2wt.% or more) is added to an epoxy matrix and then mixed mechanically to form a CNTs/epoxy blend having relatively high viscosity.

In the second step, said blend is further mechanically mixed using a three-roll mill system, which can accurately control the gap and pressure between the rolls. The high shear force is created by three horizontally positioned rolls rotating at opposite directions and different speeds relative to each other. Proper speed of rolls, gaps and pressure between the rolls as well as operation time can provide substantially good and homogeneous distribution of CNTs in the matrix. The blend after the second step of process is termed masterbatch in the following paragraphs.

In the third step, a stoichiometric amount of curing agent is added to the masterbatch. The masterbatch is also diluted by neat epoxy resin to obtain dispersions containing various CNTs loadings. In one embodiment, the curing agent to epoxy resin ratio of approximately 175/185 by weight may be used. In alternative embodiments, the ratio of curing agent to epoxy resin may be increased or decreased as necessary to cure the nanocomposite.

In the fourth step, the said dispersion is further mechanically mixed by a high shear mixer, which can control the stirring speed, stirring time, temperature and vacuum condition.

In the fifth step, said dispersion is degassed and then poured into steel moulds and cured in an oven. The degassing process can be enhanced by heat, vacuum, or flow of inert gas and the steel moulds are preheated approximately at the degassing temperature. In one embodiment, the curing schedule is recommended by the supplier and the cured samples were allowed to cool slowly to room temperature in the oven. In alternative embodiments, the cure time and temperature may be increased or decreased.

In some embodiments of the present invention, epoxy-based composites reinforced with the ozone-modified CNTs show improved mechanical properties relative to native epoxy. Compared to the pristine CNTs, the ozonized ones offer epoxy resin considerable improvements in mechanical properties.

The following examples are included to demonstrate particular embodiments of the present invention, particularly where such examples build on the above-described exemplary study. It should be appreciated by those of skill in the art that the methods disclosed in the examples represent exemplary embodiments of the present invention. However, those of skill in the art should know, in light of the present disclosure, that many changes can be made in the specific embodiments described and still obtain a like or similar results without departing from the spirit and scope of the present invention.

### EXAMPLES

### Example 1

This example serves to illustrate how the CNTs/epoxy nanocomposites can be made, in accordance with some embodiments of the present invention.

The CNTs used in this invention were primarily MWCNTs (Baytubes®) produced in a high-yield catalytic process based on chemical vapor deposition. The Baytubes® were agglomerates of multi-wall carbon nanotubes with small outer diameter, narrow diameter distribution and an ultra-high aspect ratio. Also, the Baytubes® were functionalized by gaseous ozonolysis in the presence of water vapour before integrating into the epoxy resin. In the following sections, the Baytubes® without any surface modification is termed pristine MWCNTs (*p*-MWCNTs), and the Baytubes® modified by ozonolysis is termed ozonized or functionalized MWCNTs (*f*-MWCNTs).

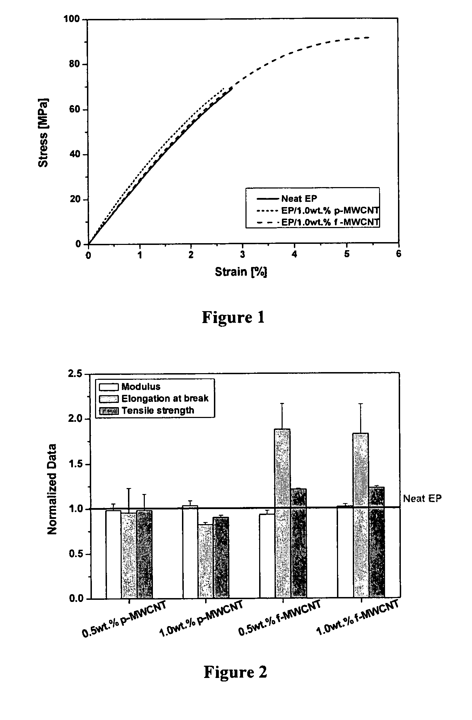

The MWCNTs-filled epoxy nanocomposites were prepared using the procedure, as shown in Figure 1. The *p-* or *f*-MWCNTs were mechanically mixed into an epoxy resin and consequently dispersed using a three-roll mill to achieve MWCNTs/epoxy masterbatch having ∼2.0wt.% loading of MWCNTs. Then the masterbatch was diluted with an appropriate amount of the neat epoxy and a stoichiometric ratio of anhydride curing agent at 60°C. The mixture was further mechanically stirred for 90 minutes. After degassing, it was poured into preheated steel moulds. The mixture was cured in an oven, according to the following curing schedule: 30 minutes at 90°C, then 60 minutes at 120°C, then 30 minutes at 140°C, and finally 120 minutes at 160°C. The cured resin was then allowed to cool slowly to room temperature in the oven.

### Example 2

This example serves to illustrate dispersion state of MWCNTs in epoxy resin and MWCNTs-epoxy interfacial adhesion, characterized by SEM and TEM, in accordance with some embodiments of the present invention.

The dispersion state of MWCNTs in cured epoxy nanocomposites was observed by transmission electron microscopy (FEI Tecnai G² 20). TEM specimens were cut from composite blocks using an ultra-microtome (LKB Nova) equipped with a diamond knife. The first few ultra-thin sections, which ranged in thickness from 60 to 90 nm, were used for investigation. The thin sections were collected on 200 mesh copper grids and observed using TEM which operated at 200kV. No big agglomerates can be found in the epoxy composites filled with both *p*- and *f*-MWCNTs. And the latter (ozonized) appears to be dispersed into epoxy resin more homogeneously than the former (pristine).

SEM images of fracture surfaces taken from tensile tests further illustrate the interfacial bonding between MWCNTs and epoxy (using SEM HITAHI S-4800 microscope). Lots of the *p*-MWCNTs are exposed on the fracture surface of composite sample and some voids after debonding of carbon nanotubes can be clearly observed, indicating poor interfacial adhesion between *p*-MWCNT and epoxy. By comparison, for the *f*-MWCNTs- filled epoxy composite, only small amount of *f-*MWCNTs are observed on the fracture surface and a few voids can be found. This phenomenon suggests that ozonolysis clearly improves the compatibility and the interfacial adhesion between *f-*MWCNT and epoxy.

### Example 3

This example serves to illustrate effects of MWCNTs on the mechanical properties of epoxy resin, in accordance with the embodiments of the present invention.

Tensile tests were performed following the ASTM D638 procedure using an Instron 5848 microTester at a crosshead speed of 1.0 mm/min at room temperature. At least five specimens for each sample were performed so as to obtain Young's modulus, tensile strength and elongation at break of the samples studied. Quasi-static fracture toughness tests were carried out following the ASTM D5045 procedure. A pre-crack was made by lightly tapping a sharp fresh razor blade into the bottom of the saw slot in the specimen (7x36x36 mm³). Through this method, the crack can pop into the material over several millimetres, yielding a natural crack. The tensile loading of the compact tension specimens was accomplished on an Instron 5848 microTester at a crosshead speed of 1.0mm/min. The actual crack length was measured after the fracture test by an optical microscope equipped with a micrometer scale. The plane strain critical stress intensity (K_{IC}) and plain strain critical strain energy release rate (G_{IC}) can be calculated according to the related standard. At least five specimens were tested for each sample.

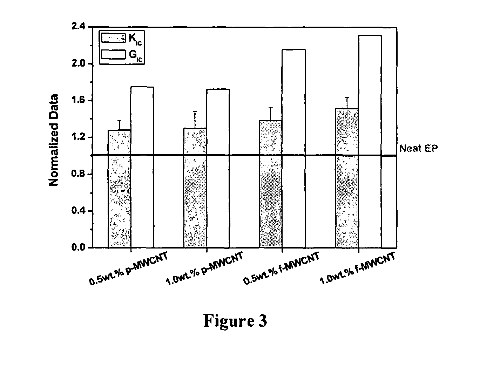

Figure 2 shows the typical tensile stress-strain curves for the neat epoxy matrix and nanocomposites. Both neat epoxy resin and *p*-MWCNTs-filled epoxy composites are broken in a brittle fashion, no obvious deflections can be detected in the curves, whereas, the *f*-MWCNTs-filled epoxy composites show somewhat ductile fracture behavior. To better understand the reinforcing effects of MWCNTs, the relative improvements (normalized values) in Young's modulus, tensile strength and elongation at break are illustrated in Figure 3. In general, *f-*MWCNTs are by far more effective in reinforcing epoxy resin, as compared to the *p*-MWCNTs. About 82% increase in elongation at break is achieved at the *f*-MWCNTs loading of 1wt.%. Figure 4 shows the relative improvements (normalized values) in K_{IC} and G_{IC} of the samples studied. Both *p*-MWCNTs and *f*-MWCNTs toughen the epoxy resin significantly. The *f*-MWCNTs are by far more effective in toughening epoxy resin, as compared to the *p*-MWCNTs. About 110% increase in G_{IC} is achieved with the *f*-MWCNT incorporation of 1wt.%. This could be ascribed to the good interfacial adhesion between epoxy and *f*-MWCNTs.

## Claims

1. Composite material comprising epoxy polymers, carbon nanotubes and optionally curing agents, **characterized in that** the carbon nanotubes have been oxidized by simultaneous treatment with oxygen/ozone in the gas phase comprising the steps
a) placing carbon nanotubes into a reaction zone
b) passing a mixture of ozone, oxygen and water through the carbon nanotubes.

2. Material according to claim 1, **characterized in that** the mixture of ozone, oxygen and water is passed continuously through carbon nanotubes agglomerates.

3. Material according to claim 1 or 2, **characterized in that** the temperature in the reaction zone is at last 200 °C, preferably at last 120 °C, more preferably from 0 to 100 °C, most preferably 10 to 60 °C.

4. Material according to any of claims 1 to 3, **characterized in that** the reaction time of ozonolysis of carbon nanotubes is up to 120 minutes, preferably up to 60 minutes, most preferably up to 30 minutes.

5. Material according to any of claims 1 to 4, **characterized in that** the exposure of carbon nanotubes is carried out with an ozone/oxygen mixture including a percentage of ozone from 1 vol.-% to about 11 vol.-%.

6. Material according to any of claims 1 to 5, **characterized in that** the flow rate of the mixture of ozone, oxygen and water is from about 100 1/hour to about 1000 1/hour, preferably from about 100 1/hour to about 200 1/hour per 1 g of carbon nanotubes.

7. Material according to any of claims 1 to 6, **characterized in that** the relative humidity of water vapour in the reaction zone is up to 100 %, preferably at least 10 % up to 100 %, particularly preferred 10 % to 90 %.

8. Material according to any of claims 1 to 7, **characterized in that** the amount of carbon nanotubes is from 0.01 to 5 % by weight, preferably from 0.05 to 3 % by weight, particularly preferred from 0.1 to 1 % by weight of the composite material.

9. Material according to any of claims 1 to 8, **characterized in that** the epoxy polymer is selected from the group of diglydicyl dether of bisphenol A epoxy (DGEBA), novolac epoxy, brominated epoxy polymers and combinations thereof.

10. Material according to any of claims 1 to 9, **characterized in that** the curing agent is selected from the group of aromatic amine curing agents comprising diaminodiphenyl sulfone (DDS), diaminodiphenyl methane (DDM) and others.

11. Process for the production of a material according to any of claims 1 to 10 comprising the steps of 1) mechanically mixing ozonized CNTs into epoxy resin to form a mixture; 2) dispersing the mixture by a high shear mixing system to form a homogeneous CNT/epoxy masterbatch; 3) adding optionally a curing agent and additional epoxy resin to the masterbatch to form a dispersion; 4) further mechanically mixing the dispersion to form a homogeneous mixture; 5) degassing and curing the mixture to form a CNT/epoxy composite, wherein the CNTs are dispersed and integrated into the epoxy matrix.

12. Use of a composite material according to any of claims 1 to 10 for the manufacturing of wind turbines, vehicle and bridge construction parts and sporting goods.
